# EUROPEAN PATENT APPLICATION

(11) **EP 2 298 093 A1**
(43) Date of publication of application: **23.03.2011**
(21) Application number: 10176059.3
(22) Date of filing: 09.09.2010
(51) Int. Cl.: A23N 17/00, A23K 1/00

(54) **A system for preparing an end product as well as a vessel for conditioning a product**

(30) Priority: 18.09.2009 NL 1037298
(71) Applicant: Van Aarsen Machinefabriek B.V., 6097 EW Panheel (NL)
(72) Inventor: Derckx, Henricus Antonius Jacobus Maria, 3680 Maaseik (BE)
(74) Representative: Algemeen Octrooi- en Merkenbureau

(57) **Abstract**

The invention relates to a vessel (1) for conditioning a product. The vessel is provided with an inlet as well as with an outlet (3) being longitudinally spaced therefrom, which outlet (3) is formed by one end of the vessel (1). The product is to conveyed to the outlet and to be discharged through the outlet in a conveying direction, using conveying means. The outlet (3) is provided with several cutting blades (9) extending substantially parallel to each other, the blade surfaces of which cutting blades (9) are oriented so that the product cut up by the cutting blades (9) can be discharged from the vessel in a metered manner between the cutting blades (9) thereof.

## Description

The invention relates to a vessel for conditioning a product, which vessel is provided with an inlet as well as with an outlet being longitudinally spaced therefrom, which outlet is formed by one end of the vessel, which product is to conveyed to the outlet and to be discharged through the outlet in a conveying direction, using conveying means.

The invention further relates to a system for preparing an end product, preferably mixed feed for animals, which system comprises such a vessel.

Such a vessel is known per se. The known vessel has two ends, one end of which forms an outlet. The amount of product being discharged through the outlet can be varied by varying the carrying velocity that can be set with the aid of the conveying means.

A drawback of such a known vessel is that because one end forms the outlet, said outlet has relatively large dimensions, as a consequence of which the product exits the outlet in a relatively uncontrolled manner. In this way it is not possible to predict the exact moment when an amount of product will fall from the outlet under the influence of the force of gravity. When temporarily no discharge of product through the outlet is desired, for example, this cannot be directly realised, in spite of the fact that the conveying means has been stopped, on account of the so-called caving effect. External influences may trigger such a caving effect even several minutes after the conveying means have been stopped.

Accordingly it is an object of the present invention to provide a vessel by means of which the product can be discharged in a more adequately controlled manner.

This object is accomplished with the vessel according to the present invention in that the outlet is provided with several cutting blades extending substantially parallel to each other, the blade surfaces of which cutting blades are oriented so that the product cut up by the cutting blades can be discharged from the vessel in a metered manner between the cutting blades thereof.

With the vessel according to the present invention, a controlled discharge of the product through the outlet takes place at any carrying velocity, because the product, rather than being discharged in a large amount in an avalanche-like and thus unpredictable manner through the outlet, is cut up by the cutting blades, with smaller amounts of the cut-up product being collected on the blade surfaces, which smaller amounts will fall off the blade surfaces under the influence of the force of gravity at a specific angle of inclination. By having the cutting blades cut up the large flow of product to be discharged through the outlet into small product flows distributed over the blade surfaces and between the passages between the cutting blades, a more uniform discharge or a more uniform metering of the product is realised.

Preferably, substantially the entire opening defined by the outlet is provided with cutting blades. The cutting blades furthermore have substantially the same orientation. Preferably, at least 5 cutting blades are provided per meter of diameter of the outlet of the vessel.

The product, preferably a viscous or, in other words, pasty mass is discharged through the outlet for further processing, for example to a pelletizing machine. The product may also be a powder or a granulate, however.

In the vessel, at least one conditioning treatment is carried out, for example the provision of time, so that moisture applied to the, for example powdery, product, for example by using steam, can be absorbed by the product to a desired extent, or, in another example of a conditioning treatment, so that a product can be allowed to dry further, making use of heat generated in the walls of the vessel. Other product-specific conditioning treatments may be carried out in the vessel as well, of course. The residence time of the mass in the vessel is in particular determined by the conveying means, via which the residence time of the product in the vessel can be reduced or extended for the purpose of optimizing the conditioning treatment to be carried out in the vessel.

A very advantageous embodiment of the vessel according to the invention is **characterised in that** the cutting blades can be reciprocated for the purpose of cutting up the product through a sawing movement of the cutting blades.

The cutting blades are preferably relatively thin and elongate in shape. By reciprocating the cutting blades in the longitudinal direction thereof, which longitudinal direction extends transversely to the conveying direction, a maximum cutting contact is realised between thin sides of the cutting blades and the product, and the mass is subjected to a kind of cutting or sawing movement obtained from the reciprocating movement of the cutting blades, so that the product is optimally cut up. This is advantageous in particular in the case of a relatively viscous product, so that a uniform discharge of the product from the vessel can be realised.

Another embodiment of the vessel according to the invention is **characterised in that** the blade surfaces include an angle of at most 45 degrees with the conveying direction, with the blade surfaces preferably extending substantially parallel to the conveying direction.

In principle the cutting blades extend substantially parallel to the conveying direction, so that the cutting or sawing action to which the product is being subjected is optimal for cutting up the product. Depending on the type of product, an angle of less than 45 degrees may result in an even more uniform discharge. Consequently, it may be desirable, depending on the product, to use a small acute angle of the cutting blades relative to the conveying direction.

It may furthermore be desirable, with a view to accelerating or slowing down the conditioning treatment to be carried out in the vessel, if the cutting blades can be adjusted to a different angle relative to the conveying direction, for example from a situation in which the cutting blades extend parallel to the conveying direction to a situation in which the cutting blades extend at a small acute angle (≤ 45 degrees) to the conveying direction. Adjustable cutting blades can preferably move through an angular range of at most 90 degrees, i.e. from -45 degrees to +45 degrees relative to the conveying direction.

Another embodiment of the vessel according to the invention is **characterised in that** a receptacle chamber is located on the side of the cutting blades remote from the conveying means, which receptacle chamber comprises a funnel-shaped portion for receiving and discharging the cut-up product.

While the product is being discharged via small flows between the knives, the product that has been divided up into flows will fall in a regular flow into a funnel-shaped portion, where the product is to be collected, under the influence of the force of gravity. From said funnel-shaped portion, the product will be supplied to a pelletizing machine or an extrusion machine, for example.

Yet another embodiment of the vessel according to the invention is **characterised in that** the cutting blades comprise a vibrating function.

The vibrating function of the cutting blades makes it possible to cause product particles that have remained behind on the cutting blades to fall from the cutting blades when the vessel is being emptied, for example for a stop or a product change, thus making it possible to exclude or reduce the risk of undesirable contamination of the cutting blades.

The invention further relates to a system for preparing (preferably) mixed feed for animals, which system comprises a vessel as described above. The vessel used in the system according to the present invention is preferably a retention vessel. Furthermore, the system preferably comprises a pelletizing machine or an extrusion device. The system may further comprise a conditioning device disposed upstream of the retention vessel for moisturizing and/or heating the ingredients for providing the viscous mass to be prepared by means of the vessel according to the present invention.

The present invention will now be explained in more detail with reference to an embodiment shown in the figures.
Figure 1 is a schematic, perspective rear view of a part of a vessel according to the present invention.
Figure 2 is a schematic side view of a vessel according to the present invention.
Figure 3 is a schematic side view of a vessel according to the present invention during operation.

Like parts are indicated by the same numerals in the various figures.

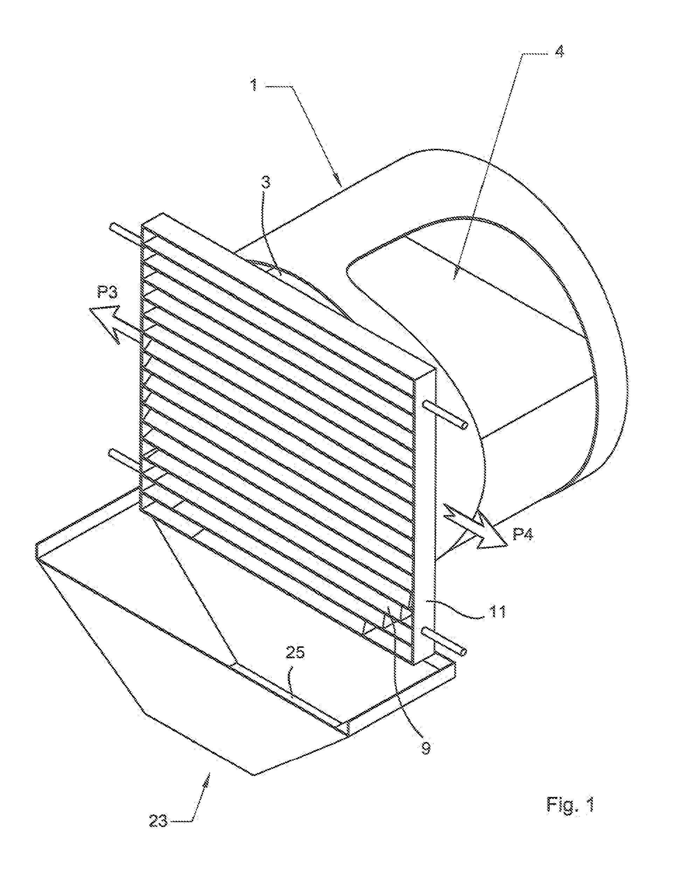

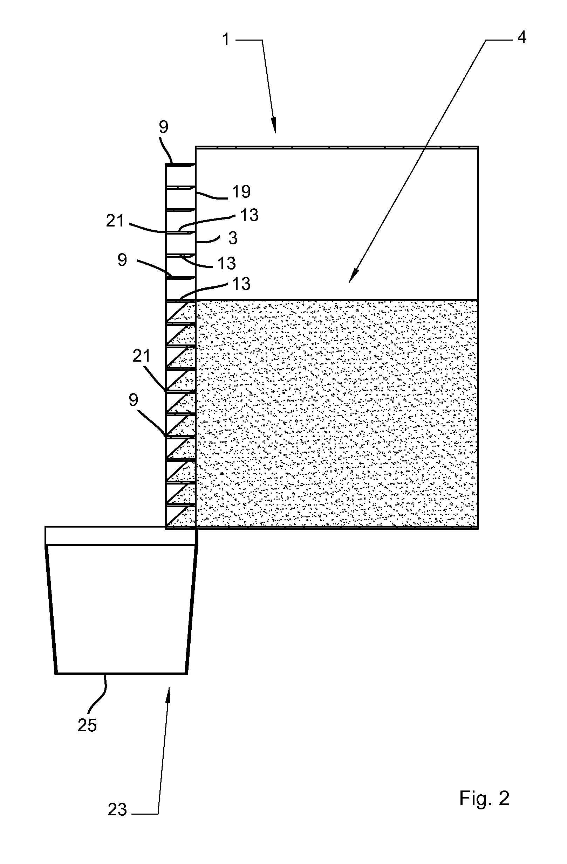

Figures 1-3 show different views of a part of a cylindrical vessel 1 according to the present invention. The vessel 1 has two ends 2, only one of which is shown in the figures. The end 2 shown in the figures defines an opening, which will be referred to below as the outlet 3 of the vessel 1. A product 4 is discharged from the vessel 1 through the outlet 3. The outlet 3 has a surface area of at least 1 m².

The vessel 1 according to the present invention is preferably designed for conditioning a product 4, for example a mass which has been moisturised or which is to be moisturised, preferably a mass comprising ingredients for mixed animal feed. The vessel 1 has an inlet (not shown) as well as an outlet 3 spaced therefrom in the longitudinal direction of the vessel 1.

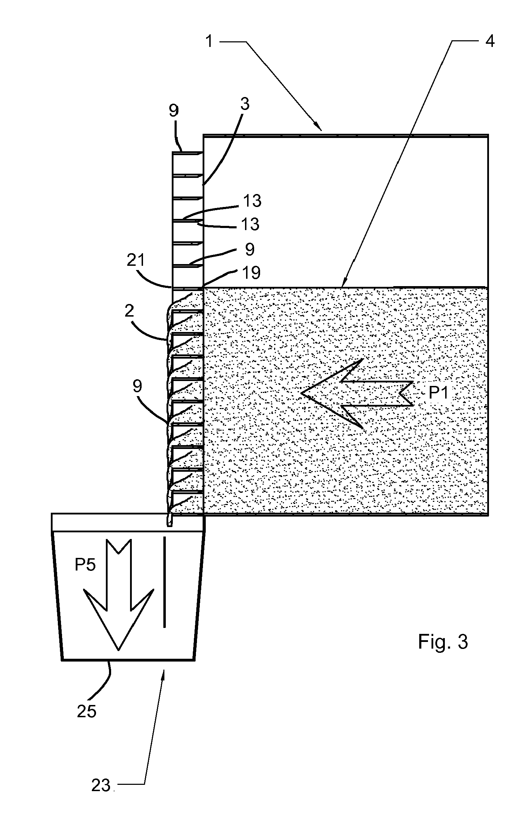

The vessel 1 is provided with conveying means (not shown) driven by means of a driving mechanism (not shown). The conveying means 5 is to that end provided with a conveyor screw, for example. A product 4 present in the vessel 1 is to be transported to the outlet 3 in a conveying direction P1 (see figure 3) parallel to the longitudinal direction of the vessel 1.

In the vessel 1, the product 4 is subjected to at least one conditioning treatment. Said at least one conditioning treatment comprises, for example, the provision of time for the product 4, so that moisture present on and in the product 4 is given (more time) to be (further) absorbed, so that a desired moisture content can be achieved. Said conditioning treatment to be carried out in the vessel 1 can be modified with the aid of the conveying means, for example, since it is possible, using the conveying means, to determine the carrying rate and thus the residence time of the product 4 in the vessel 1. As a rule, the product being subjected to said conditioning treatment in the vessel 1 is more viscous near the outlet 3 than near the inlet.

It is possible, of course, to carry out further conditioning treatments, for example heating or cooling the product 4, by means of the vessel 1.

In order to optimize the rate of discharge of the product 4 through the outlet 3 of the vessel 1, the outlet 3 is provided with metering means comprising parallel cutting blades 9 arranged substantially in spaced-apart relationship over the circular section of the vessel 1. The seventeen cutting blades 9 are interconnected by a frame 11 at their longitudinal ends.

In the illustrated embodiment, the cutting blades 9 are relatively elongate and thin. Preferably, and as shown in the figures, the longitudinal direction of the cutting blades 9, as well as the blade surfaces 13, is substantially parallel to the horizontal.

The knives 9 are connected to a driving gear (not shown) by means of couplings 15. The driving gear comprises a motor for reciprocating the cutting blades 9 in the directions indicated by the arrows P3 and P4 for the purpose of cutting up the product 4 being moved to the outlet 3, whilst the cut-up mass can be discharged between the cutting blades 9 in a metered manner.

Preferably, as shown in the figures, the seventeen cutting blades 9 are arranged in a regular grate-shaped pattern over the entire area of the outlet 3.

Each blade comprises two blade surfaces 13, a side 19 facing the product 4, a side 21 facing away from the product 4, as well as two sides (not shown) extending in the longitudinal direction, which latter sides are connected to the frame 11.

By reciprocating the frame 11 with the cutting blades 9 connected thereto, the product 4 can be subjected to a cutting or sawing operation near the outlet 3. The product 4 is cut up by means of the cutting or sawing sides 19, whereupon the cut-up product 4 falls onto the upper blade surface 13 of each blade 9 to be discharged between two vertically spaced cutting blades 9. Depending on the product and the conditioning treatment carried out in the vessel 1, the product accumulating on the blade surface 13 will start to flow under the influence of the force of gravity at a particular angle of inclination. As a result of the continuous reciprocating movement of the cutting blades 9 and the conveying direction of the product indicated by the arrow P1, the cut-up product 4 will be pushed off the upper surface 13 in the direction of a receptacle chamber. The receptacle chamber is located on a side of the cutting blades 9 remote from the product 4. The receptacle chamber comprises a funnel-shaped portion 23, which terminates in a hole 25 for receiving and discharging the cut-up product flows 27 of the product 4 from the vessel 1 in the direction indicated by the arrow P5.

A tube or a pipe (not shown) may be connected to said hole 25, through which tube or pipe the mass can be continuously and evenly discharged and be supplied to, for example, a pelletizing machine (not shown) or an extrusion machine (not shown). The above-described vessel 1 is in particular suitable for realising a desired degree of humidity in the mass, so that the mass will be ready for processing in a pelletizing machine.

The vessel 1 may furthermore comprise a vibrating device (not shown) for vibrating the cutting blades 9, so that the product remnants that may be present thereon can be vibrated off the cutting blades, thereby reducing or even eliminating the risk of contaminations between the various batches.

It is furthermore possible to provide the outlet 3 with adjustable cutting blades 9, which cutting blades can assume different angles relative to the conveying direction, whilst the rate of discharge of the product can be further adjusted (temporarily) by changing the angle of the cutting blades 9.

Instead of covering the entire outlet 3 with cutting blades 9, it is also possible to provide at least that part of the outlet 3 through which the product is discharged during operation with cutting blades 9.

The vessel has a central axis, which central axis preferably crosses the outlet substantially perpendicularly. The central axis preferably extends substantially parallel to the horizontal. Using such an outlet fitted with cutting blades 9, an easily controllable and continuous discharge of, for example, a viscous mass from the vessel is ensured. When the vessel is used as a retention vessel, the viscous mass can have an optimum degree of humidity of approximately 20 wt.% upon being discharged from the vessel. Such a degree of humidity provides excellent properties when preparing mixed feed pellets, for example, i.e. it provides mixed feed pellets exhibiting a desired hardness, wear resistance and PDI (Pellet Durability Index) in a subsequent pelletizing process.

The surface area of the outlet 3 is not relevant for the implementation of the inventive concept of the vessel 1 according to the present invention.

## Claims

1. A vessel for conditioning a product, which vessel is provided with an inlet as well as with an outlet being longitudinally spaced therefrom, which outlet is formed by one end of the vessel, which product is to conveyed to the outlet and to be discharged through the outlet in a conveying direction, using conveying means, **characterised in that** the outlet is provided with several cutting blades extending substantially parallel to each other, the blade surfaces of which cutting blades are oriented so that the product cut up by the cutting blades can be discharged from the vessel in a metered manner between the cutting blades thereof.

2. A vessel according to claim 1, **characterised in that** the cutting blades can be reciprocated for the purpose of cutting up the product through a sawing movement of the cutting blades.

3. A vessel according to claim 1 or 2, **characterised in that** the blade surfaces include an angle of at most 45 degrees with the conveying direction, with the blade surfaces preferably extending substantially parallel to the conveying direction.

4. A vessel according to any one of the preceding claims, **characterised in that** a receptacle chamber is located on the side of the cutting blades remote from the conveying means, which receptacle chamber comprises a funnel-shaped portion for receiving and discharging the cut-up product.

5. A vessel according to any one of the preceding claims, **characterised in that** the metering means comprises a vibrating function.

6. A vessel according to any one of the preceding claims, **characterised in that** the blade surfaces of the metering means are substantially identically oriented.

7. A vessel according to any one of the preceding claims, **characterised in that** substantially the entire opening defined by the outlet is provided with cutting blades.

8. A system for preparing an end product, preferably mixed feed for animals, comprising a vessel according to any one of the preceding claims.
